# EUROPEAN PATENT APPLICATION

(11) **EP 4 592 259 A1**
(43) Date of publication of application: **30.07.2025**
(21) Application number: 23868068.0
(22) Date of filing: 08.09.2023
(51) Int. Cl.: C03C 10/04, H01B 1/06, H01M 10/052, H01M 10/0562, H01M 4/62

(54) **CRYSTALLIZED GLASS AND METHOD FOR MANUFACTURING CRYSTALLIZED GLASS**

(30) Priority: 20.09.2022 JP 2022148696
(71) Applicant: AGC INC., Chiyoda-ku, Tokyo 1008405 (JP)
(72) Inventor: SUZUKI, Miyuri, Tokyo 100-8405 (JP); YAMADA, Kohta, Tokyo 100-8405 (JP); ITO, Kazuhiro, Tokyo 100-8405 (JP); TERATANI, Takuya, Tokyo 100-8405 (JP)
(74) Representative: Müller-Boré & Partner Patentanwälte PartG mbB
(86) International application number: PCT/JP2023/032810
(87) International publication number: WO 2024/062945

(57) **Abstract**

A crystallized glass comprising: lithium (Li), element M, phosphorus (P), and oxygen (O); and at least one selected from boron (B) and silicon (Si), wherein the element M includes at least one selected from the group consisting of zirconium (Zr), hafnium (Hf), tin (Sn), samarium (Sm), niobium (Nb), tantalum (Ta), tungsten (W), and molybdenum (Mo), the maximum peak, in an X-ray diffraction pattern of the crystallized glass, appearing in a range of 2θ=20° to 30° is derived from a monoclinic crystal structure, and the half width of the maximum peak is 0.10° or more.

## Description

### TECHNICAL FIELD

The present invention relates to a glass ceramic and a method for producing a glass ceramic.

### BACKGROUND ART

In recent years, an all-solid-state lithium ion battery has been attracting attention from the viewpoint of safety, high-speed charging, and the like. The all-solid-state lithium ion battery uses a solid electrolyte instead of a liquid electrolyte, and is therefore free from problems such as liquid leakage and has high safety.

### CITATION LIST

### PATENT LITERATURE

Patent Literature 1: WO2021/251405

### SUMMARY OF INVENTION

### TECHNICAL PROBLEM

So far, a sulfide-based solid electrolyte has been known as a solid electrolyte for the lithium ion battery. However, the sulfide-based solid electrolyte has the problem of generating hydrogen sulfide when reacting with moisture in the air.

On the other hand, an oxide-based solid electrolyte has higher environmental stability and is easier to handle than the sulfide-based solid electrolyte, and is therefore considered to be a promising material for use as a solid electrolyte in an all-solid-state battery.

However, the currently available oxide-based solid electrolyte has a problem in terms of lithium ion conductivity. For example, the lithium ion conductivity of the currently available oxide-based solid electrolyte is at least one order of magnitude lower than the lithium ion conductivity of a common sulfide-based solid electrolyte.

Note that, Patent Literature 1 discloses a lithium ion conductive oxide containing amorphous LiTa₂PO₈ to address these problems. However, even in this material, it cannot be said that the lithium ion conductivity is comparable to the lithium ion conductivity of the sulfide-based solid electrolyte.

Thus, there is still a demand for an oxide-based solid electrolyte having a high lithium ion conductivity.

The present invention has been made in view of the above background, and an object of the present invention is to provide a glass ceramic having a high lithium ion conductivity that is applicable as a solid electrolyte for a lithium ion battery. Another object of the present invention is to provide a method for producing such a glass ceramic having a high lithium ion conductivity.

### SOLUTION TO PROBLEM

The present invention provides a glass ceramic including:
lithium (Li);
an element M;
phosphorus (P);
oxygen (O); and
at least one element selected from boron (B) and silicon (Si), in which
the element M includes at least one element selected from the group consisting of zirconium (Zr), hafnium (Hf), tin (Sn), samarium (Sm), niobium (Nb), tantalum (Ta), tungsten (W), and molybdenum (Mo), and
in an X-ray diffraction pattern of the glass ceramic, a maximum peak occurring in a range of 2θ = 20° to 30° is derived from a monoclinic crystal structure, and a half width of the maximum peak is 0.10° or more.

In addition, the present invention provides a method for producing a glass ceramic, the method including:
(1) a step of mixing a first raw material containing lithium (Li), an element M, phosphorus (P), and oxygen (O) with a second raw material containing at least one element selected from boron (B) and silicon (Si) to prepare a mixed powder, where the element M includes at least one element selected from the group consisting of zirconium (Zr), hafnium (Hf), tin (Sn), samarium (Sm), niobium (Nb), tantalum (Ta), tungsten (W), and molybdenum (Mo);
(2) a step of heating the mixed powder to a temperature of 1200°C to 1650°C to obtain a melt;
(3) a step of cooling the melt to form a glass cullet containing a seed crystal;
(4) a step of pulverizing the glass cullet to obtain a glass frit containing the seed crystal; and
(5) a step of heating the glass frit to a temperature equal to or higher than a crystallization temperature to form a glass ceramic.

### ADVANTAGEOUS EFFECTS OF INVENTION

In the present invention, it is possible to provide a glass ceramic having a high lithium ion conductivity that is applicable as a solid electrolyte for a lithium ion battery. In the present invention, it is also possible to provide a method for producing such a glass ceramic having a high lithium ion conductivity.

### BRIEF DESCRIPTION OF DRAWINGS

FIG. 1 is a flow chart schematically showing an example of a method for producing a glass ceramic according to one embodiment of the present invention.
FIG. 2 is a diagram showing an example of an X-ray diffraction pattern of a glass ceramic (sample 1) according to one embodiment of the present invention.
FIG. 3 is a diagram showing an example of an X-ray diffraction pattern of a glass ceramic (sample 2) according to another embodiment of the present invention.
FIG. 4 is a diagram showing an example of an X-ray diffraction pattern of a glass ceramic (sample 4) according to still another embodiment of the present invention.
FIG. 5 is a diagram showing results of EDX elemental mapping of the glass ceramic (sample 1) according to the embodiment of the present invention.
FIG. 6 is a diagram showing results of EDX elemental mapping of the glass ceramic (sample 2) according to the another embodiment of the present invention.
FIG. 7 is a diagram showing results of EDX elemental mapping of a glass ceramic (sample 22) according to a comparative example.

### DESCRIPTION OF EMBODIMENTS

Hereinafter, one embodiment of the present invention will be described.

In one embodiment of the present invention, there is provided a glass ceramic containing:
lithium (Li);
an element M;
phosphorus (P);
oxygen (O); and
at least one selected from boron (B) and silicon (Si), in which
the element M includes at least one selected from the group consisting of zirconium (Zr), hafnium (Hf), tin (Sn), samarium (Sm), niobium (Nb), tantalum (Ta), tungsten (W), and molybdenum (Mo), and
in an X-ray diffraction pattern of the glass ceramic, a maximum peak occurring in a range of 2θ = 20° to 30° is derived from a monoclinic crystal structure, and a half width of the maximum peak is 0.10° or more.

In the present application, hereinafter, Li, the element M, P, and O are collectively also referred to as a "first component", and B and Si are collectively also referred to as a "second component".

The "first component" is a component that contributes to crystallization during a process of producing the glass ceramic (details will be given below), and the "second component" is a component that contributes to glass formation during the process of producing the glass ceramic (details will be given below). However, it should be noted that these divisions are merely for convenience and are not absolute. For example, Li, P, and O may be present in both the "first component" and the "second component".

As described above, there is a demand for an oxide-based solid electrolyte having a high lithium ion conductivity.

In this regard, in one embodiment of the present invention, there is provided a glass ceramic having a significantly high lithium ion conductivity, for example, more than 0.40 mS/cm. Therefore, in the case where the glass ceramic according to the embodiment of the present invention is applied as a solid electrolyte in a lithium ion battery, a high lithium ion conductivity can be obtained.

The glass ceramic according to the embodiment of the present invention has a crystalline portion and has a feature that a peak appears in a range of 2θ = 20° to 30° in an X-ray diffraction pattern. In particular, the maximum peak appearing in the range of 2θ = 20° to 30° corresponds to a monoclinic crystal structure of an oxide containing the "first component". The half width of this maximum peak is 0.10° or more.

The half width of this maximum peak is preferably in a range of 0.10° to 0.50°, more preferably in a range of 0.10° to 0.30°, still more preferably in a range of 0.10° to 0.20°, particularly preferably in a range of 0.10° to 0.17°, and most preferably in a range of 0.10° to 0.15°.

Owing to the crystalline component having a monoclinic crystal structure, the glass ceramic according to the embodiment of the present invention has a high lithium ion conductivity.

The glass ceramic according to the embodiment of the present invention has a crystal portion and a grain boundary portion. The crystal portion may contain at least one of Si and B, in addition to Li, the element M, P, and O. The grain boundary portion may contain P and O.

### (Other Features of Glass Ceramic According to One Embodiment of Present Invention)

Next, other features of the glass ceramic according to the embodiment of the present invention (hereinafter referred to as a "first glass ceramic") will be described.

### (Composition)

As described above, the first glass ceramic contains the element M, and the element M may include at least one selected from the group consisting of Zr, Hf, Sn, Sm, Nb, Ta, W, and Mo. In particular, the element M preferably includes Ta.

A content of Li is preferably in a range of 29.0 at% to 44.5 at%, more preferably in a range of 29.5 at% to 42.0 at%, still more preferably 30.0 at% to 39.0 at%, particularly preferably 30.5 at% to 36.0 at%, and most preferably 31.0 at% to 33.0 at%, with respect to a total amount of cations contained in the first glass ceramic.

In addition, a content of the element M is preferably 25.5 at% to 45.0 at%, more preferably 30.0 at% to 44.0 at%, still more preferably 35.0 at% to 43.0 at%, particularly preferably 38.0 at% to 42.0 at%, and most preferably 40.0 at% to 41.0 at%, with respect to the total amount of cations contained in the first glass ceramic.

Further, a content of P is preferably 13.0 at% to 22.5 at%, more preferably 15.0 at% to 22.0 at%, still more preferably 17.0 at% to 21.5 at%, particularly preferably 19.0 at% to 21.0 at%, and most preferably 20.0 at% to 20.5 at%, with respect to the total amount of cations contained in the first glass ceramic.

In the case of containing B, a content of B is preferably 2.5 at% to 13.0 at%, more preferably 3.0 at% to 11.0 at%, still more preferably 3.5 at% to 9.0 at%, particularly preferably 4.0 at% to 7.0 at%, and most preferably 4.5 at% to 5.5 at%, with respect to the total amount of cations contained in the first glass ceramic.

Further, in the case of containing Si, a content of Si is preferably 0.8 at% to 3.8 at%, more preferably 1.0 at% to 3.0 at%, still more preferably 1.2 at% to 2.5 at%, particularly preferably 1.3 at% to 2.0 at%, and most preferably 1.4 at% to 1.7 at%, with respect to the total amount of cations contained in the first glass ceramic.

The glass ceramic according to the embodiment of the present invention may have a glass transition temperature Tg in a range of 600°C to 800°C.

As described above, the glass ceramic according to the embodiment of the present invention may have a Li ion conductivity of 0.40 mS/cm or more at room temperature.

### (Application Example)

The first glass ceramic exhibits a high Li ion conductivity and is therefore applicable to various electrochemical devices such as an all-solid-state battery.

For example, the first glass ceramic may be applied as a solid electrolyte (layer or sheet) in various electrochemical devices. Alternatively, the first glass ceramic may be applied to an electrode in various electrochemical devices.

### (Method for Producing Glass Ceramic According to One Embodiment of Present Invention)

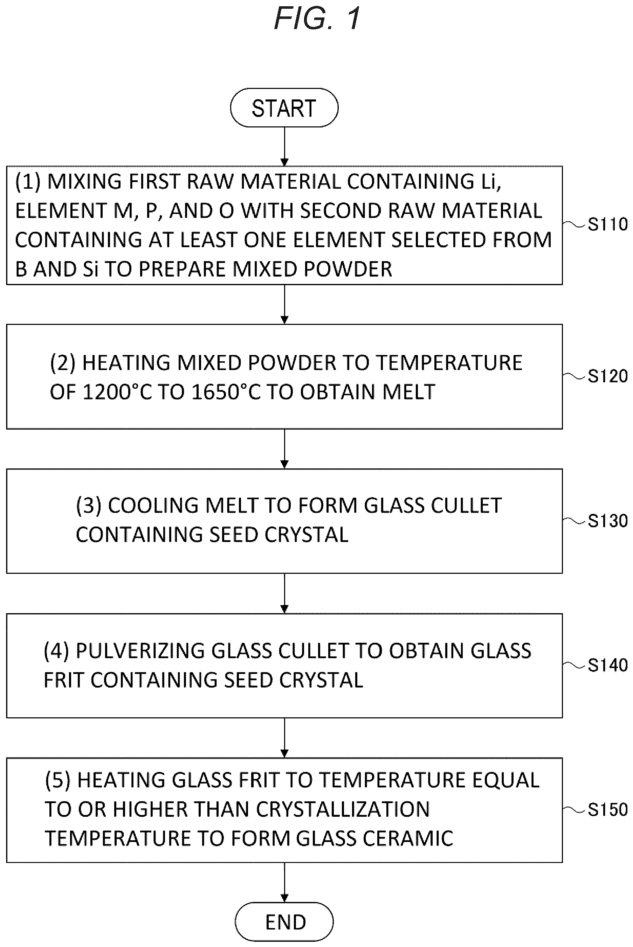

Next, an example of a method for producing a glass ceramic having the above features will be described with reference to FIG. 1.

FIG. 1 schematically shows an example of a flow of a method for producing the glass ceramic according to the embodiment of the present invention.

As shown in FIG. 1, the method for producing the glass ceramic according to the embodiment of the present invention (hereinafter referred to as a "first method") includes:
(1) a step (S110) of mixing a first raw material containing Li, an element M, P, and O with a second raw material containing at least one selected from B and Si to prepare a mixed powder;
(2) a step (S120) of heating the mixed powder to a temperature of 1200°C to 1650°C to obtain a melt;
(3) a step (S130) of cooling the melt to form a glass cullet containing a seed crystal;
(4) a step (S140) of pulverizing the glass cullet to obtain a glass frit containing the seed crystal; and
(5) a step (S150) of heating the glass frit to a temperature equal to or higher than a crystallization temperature to form a glass ceramic.

Hereinafter, each step will be described in more detail.

### (Step S110)

First, the raw materials are mixed to prepare a mixed powder.

The raw materials include the first raw material and the second raw material. The first raw material and the second raw material are preferably mixed in a powder state.

The first raw material contains Li, the element M, P, and O. The second raw material contains Si and B.

The first raw material is a raw material that is mainly required for forming a crystal portion in the glass ceramic to be formed in the subsequent step S 150. The second raw material is a raw material that is mainly required for forming a glass portion in the glass frit to be obtained in the step S 140.

However, it shold be noted that these divisions for the first raw material and the second raw material are merely for convenience and are not absolute. For example, Li, P, and O may be present in both the "first raw material" and the "second raw material".

The first raw material contains the element M. As described above, the element M represents at least one element selected from the group consisting of Ta, Zr, Hf, Sn, Sm, Nb, Ta, W, and Mo.

For example, the first raw material may contain a Li compound and/or a phosphate. In addition, the first raw material may contain a compound of the element M and/or a phosphate. For example, in the case where the element M is tantalum (Ta), the first raw material may contain tantalum oxide.

On the other hand, the second raw material contains Si and B. The second raw material may further contain Li and/or P. For example, the second raw material may contain a Si compound, a lithium salt of silicon oxide, a phosphate of silicon, a B oxide, or a lithium salt of boron oxide.

Further, a composite oxide thereof may be contained.

Further, the first raw material and the second raw material may be a composite oxide thereof.

Specific examples thereof include the following raw materials:
examples of the Li compound include lithium carbonate (Li₂CO₃), lithium hydroxide and a hydrate thereof (LiOH and LiOH.H₂O), lithium oxide (Li₂O), lithium sulfate (Li₂SO₄), lithium nitrate (LiNO₃), a lithium halide (LiF, LiCl, LiBr, and LiI), lithium cyanide (LiCN), lithium citrate (Li₃C₆H₅O₇), lithium acetate (C₂H₃LiO₂), and lithium oxalate (C₂Li₂O₄);
examples of the compound of the element M include, assuming M = Ta, a tantalum oxide (Ta₂O₅ and TaO₂), a tantalum halide (TaF₅, TaCl₅, Ta₂Br₁₀, and Ta₂I₁₀), and tantalum oxide fluoride (TaFO₂);
examples of phosphoric acid include H₃PO₄, H₄P₂O₇, HPO₃, and P₂O₅;
examples of boric acid include H₃BO₃, HBO₂, and H₂B₄O₇;
examples of the Si compound include silicon dioxide (SiO₂); and
examples of the composite oxide include a lithium phosphate (LiPO₃, Li₃PO₄, and LiH₂PO₄), a lithium silicate (Li₂SiO₃ and Li₄SiO₄), a lithium borate (LiBO₂, Li₃BO₃, and Li₂B₄O₇), and lithium tantalate (LiTaO₃).

A mixed powder is prepared by sufficiently mixing the first raw material and the second raw material.

### (Step S120)

Next, the prepared mixed powder is heated and melted in the air to form a melt.

A melting temperature is in a range of 1200°C to 1650°C, preferably in a range of 1300°C to 1600°C, and more preferably in a range of 1400°C to 1500°C.

A melting time varies depending on the amount of the mixed powder and the melting temperature, and may be, for example, 5 hours or shorter. The melting time may be, for example, 2 hours or shorter, 1 hour or shorter, or 30 minutes or shorter. The atmosphere for the heating and melting is preferably the air, or may be an oxidizing atmosphere or an inert gas atmosphere.

### (Step S130)

Next, the melt is cooled.

The cooling method is not particularly limited. The progress of crystallization from a melt involves a two-stage process: nucleation and crystal growth from a nucleus. Even when a seed crystal that serves as a nucleus is contained, it is possible to obtain a glass by cooling the melt faster than the rate of crystal growth. For example, the melt may be quenched by a roll-out machine, a press machine, dripping into a cooling liquid, or the like.

When the melt is cooled, a glass cullet containing a seed crystal is formed. At this time, the seed crystal that serves as a nucleus may be contained in the melt, or the nucleus may be generated from the melt.

The seed crystal contains an oxide of the element M. For example, in the case where the element M is Ta, the seed crystal may be Ta₂Oₓ (x = 3 to 5).

### (Step S140)

Next, the obtained glass cullet is pulverized to form a glass frit. A method of pulverizing the glass cullet is not particularly limited, and a well-known method such as a dry ball mill treatment method may be used.

The glass frit has an average particle diameter of, for example, preferably in a range of 0.01 µm to 20 µm, more preferably in a range of 0.05 µm to 15 µm, still more preferably in a range of 0.1 µm to 10 µm, particularly preferably in a range of 0.3 µm to 5 µm, and most preferably in a range of 0.5 µm to 3 µm.

Thereafter, if necessary, the glass frit may be molded to form a molded body.

The molding method is not particularly limited. For example, the glass frit may be molded by using a cold isostatic pressing method (CIP method).

### (Step S150)

Next, the molded or un-molded glass frit is subjected to a heat treatment.

A heat treatment temperature is a temperature equal to or higher than a crystallization temperature of the glass frit. For example, the heat treatment temperature is preferably in a range of 750°C to 1030°C, more preferably 750°C to 1000°C, still more preferably 800°C to 980°C, and particularly preferably 850°C to 960°C.

A heat treatment time is not particularly limited, and is, for example, in a range of 0.5 hours to 80 hours, preferably 0.5 hours to 50 hours, more preferably 0.5 hours to 30 hours, still more preferably 1 hour to 20 hours, and particularly preferably 2 hours to 10 hours.

With the heat treatment, the seed crystal contained in the glass frit becomes a nucleus, and the crystallization proceeds in the glass frit. As a result, a glass ceramic having a crystal portion and a grain boundary portion around the crystal portion is formed.

Assuming that M = Ta, the main crystal portion is LiTa₂PO₈ in which a part of P is substituted with at least one of Si and B, but may contain other crystals.

With the above method, the glass ceramic according to the embodiment of the present invention can be produced.

### Examples

Hereinafter, Examples of the present invention will be described. Note that, in the following description, Examples 1 to 4 and 11 to 14 are Inventive Examples, and Examples 21 to 23 are Comparative Examples.

### (Example 1)

A glass ceramic was prepared by using the following method.

### (Preparation of Glass Cullet)

First, 24.11 g of a tantalum oxide (Ta₂O₅, manufactured by Kanto Chemical Co., Inc., a 3N5 high-purity reagent) powder, 4.69 g of lithium metaphosphate (LiPO₃, manufactured by Hakushin Chemical Laboratory Co., Ltd.), 0.67 g of lithium metaborate (LiBO₂, manufactured by FUJIFILM Wako Pure Chemical Corporation, purity: 99% or more), 0.40 g of lithium carbonate (Li₂CO₃, manufactured by Kanto Chemical Co., Inc., a 3N5 high-purity reagent), and 0.37 g of lithium metasilicate (Li₂SiO₃, manufactured by Strem Chemicals Inc., purity: 99%) were mixed to prepare a mixed powder. The mixed powder was prepared such that lithium (Li) was 32.4%, tantalum (Ta) was 40.7%, phosphorus (P) was 20.3%, silicon (Si) was 1.5%, and boron (B) was 5.0% in at% of cations.

Next, 30 g of this mixed powder was charged into a platinum container and melted by a heat treatment in the air. The melting temperature was 1450°C, and the melting time was 30 minutes. Thereafter, the melt was sufficiently stirred with a platinum rod.

Next, the obtained melt was quenched by using a roll-out machine. Accordingly, a flaky glass cullet (hereinafter referred to as a "glass cullet 1") of about 27 g was obtained.

It is found that the obtained glass cullet 1 includes a mixture of an opaque portion and a transparent portion.

### (Preparation of Glass Frit)

The glass cullet 1 was pulverized as follows to prepare a glass frit.

15 g of the glass cullet 1 and 250 g of a stabilized zirconia ball having a diameter of 10 mm were charged into a 250 mL HDPE container and subjected to a ball mill pulverization treatment. A rotation speed was 94 rpm, and a pulverization time was 15 hours.

Accordingly, a white powder having an average particle diameter of about 1.0 µm (hereinafter referred to as a "glass frit 1") was obtained.

Note that, the average particle diameter of the glass frit was measured by using a laser diffraction scattering method.

### (Evaluation of Glass Frit)

The crystallization temperature measurement and X-ray diffraction analysis were performed using the glass frit 1.

The crystallization temperature was measured by using TG-DTA (thermogravimetry differential thermal analysis). The crystallization temperature of the glass frit 1 was 782°C.

As a result of the X-ray diffraction analysis using Cu-Kα rays, a peak derived from tantalum oxide (Ta₂O₅) was observed. From this, it is found that the glass frit 1 contains a seed crystal of tantalum oxide.

### (Preparation of Glass Ceramic)

Next, the obtained glass frit 1 was molded to form a molded body.

0.5 g of the glass frit 1 was charged into a cemented carbide mold having a diameter of 10 mm and subjected to uniaxial pressing at a press pressure of 40 MPa for 2 minutes.

Thereafter, isostatic pressing was further performed at a pressure of 200 MPa to obtain a molded body having a diameter of 10 mm and a thickness of 1.5 mm. The obtained molded body is referred to as a "molded body 1".

Next, the molded body 1 was subjected to a heat treatment by using the following method.

First, the molded body 1 was placed on a platinum dish. The platinum dish was heated to 950°C at a heating rate of 300°C/hour in the air. After maintaining at 950°C for 5 hours, the platinum dish was cooled to room temperature at a cooling rate of 300°C/hour.

After the heat treatment, a white glass ceramic (hereinafter referred to as a "sample 1") was obtained. The dimension of the sample 1 was 9.0 mm in diameter and 1.3 mm in thickness.

### (Example 2)

A glass frit (hereinafter referred to as a "glass frit 2") was prepared in the same manner as in Example 1 described above. A molded body of the glass frit 2 was subjected to a heat treatment to prepare a glass ceramic.

However, in Example 2, the powders were mixed to prepare a mixed powder such that, in the step of (Preparation of Glass Cullet) described above, Li was 34.0%, Ta was 38.8%, P was 19.4%, Si was 1.8%, and B was 6.1% in terms of at% of cations. In addition, in Example 2, the heat treatment temperature was 920°C in the step of (Preparation of Glass Ceramic). Other conditions are the same as those in Example 1.

After the heat treatment of a molded body (referred to as a "molded body 2"), a glass ceramic having a white appearance (hereinafter referred to as a "sample 2") was obtained.

Note that, as in Example 1, when the crystallization temperature of the glass frit 2 was measured, the crystallization temperature was 784°C. In addition, as a result of the X-ray diffraction analysis of the glass frit 2, it is found that the glass frit 1 contains a seed crystal of tantalum oxide.

### (Example 3)

A glass frit (hereinafter referred to as a "glass frit 3") was prepared in the same manner as in Example 1 described above. A molded body of the glass frit 3 was subjected to a heat treatment to prepare a glass ceramic.

However, in Example 3, the powders were mixed to prepare a mixed powder such that, in the step of (Preparation of Glass Cullet) described above, Li was 36.7%, Ta was 35.4%, P was 17.7%, Si was 2.4%, and B was 7.9% in terms of at% of cations. In addition, in Example 3, the heat treatment temperature was 860°C in the step of (Preparation of Glass Ceramic). Other conditions are the same as those in Example 1.

After the heat treatment of a molded body (referred to as a "molded body 3"), a glass ceramic having a white appearance (hereinafter referred to as a "sample 3") was obtained.

Note that, as in Example 1, when the crystallization temperature of the glass frit 3 was measured, the crystallization temperature was 714°C. In addition, as a result of the X-ray diffraction analysis of the glass frit 3, it is found that the glass frit 1 contains a seed crystal of tantalum oxide.

### (Example 4)

A glass frit (hereinafter referred to as a "glass frit 4") was prepared in the same manner as in Example 1 described above. A molded body of the glass frit 4 was subjected to a heat treatment to prepare a glass ceramic.

However, in Example 4, the powders were mixed to prepare a mixed powder such that, in the step of (Preparation of Glass Cullet) described above, Li was 40.1%, Ta was 31.0%, P was 15.5%, Si was 3.1%, and B was 10.3% in terms of at% of cations. Other conditions are the same as those in Example 1.

After the heat treatment of a molded body (referred to as a "molded body 4"), a glass ceramic having a white appearance (hereinafter referred to as a "sample 4") was obtained.

Note that, as in Example 1, when the crystallization temperature of the glass frit 4 was measured, the crystallization temperature was 729°C. In addition, as a result of the X-ray diffraction analysis of the glass frit 4, it is found that the glass frit 1 contains a seed crystal of tantalum oxide.

### (Example 11)

A glass ceramic was prepared in the same manner as in Example 1 described above.

However, in Example 11, the heat treatment temperature was 785°C in the step of (Preparation of Glass Ceramic). Other conditions are the same as those in Example 1.

After the heat treatment of the molded body 1, a glass ceramic having a white appearance (hereinafter referred to as a "sample 11") was obtained.

### (Example 12)

A glass ceramic was prepared in the same manner as in Example 1 described above.

However, in Example 12, the heat treatment temperature was 1000°C in the step of (Preparation of Glass Ceramic). Other conditions are the same as those in Example 1.

After the heat treatment of the molded body 1, a glass ceramic having a white appearance (hereinafter referred to as a "sample 12") was obtained.

### (Example 13)

A glass ceramic was prepared in the same manner as in Example 1 described above.

However, in Example 13, the heat treatment time was 30 hours at 950°C in the step of (Preparation of Glass Ceramic). Other conditions are the same as those in Example 1.

After the heat treatment of the molded body 1, a glass ceramic having a white appearance (hereinafter referred to as a "sample 13") was obtained.

### (Example 14)

A glass ceramic was prepared in the same manner as in Example 1 described above.

However, in Example 14, the heat treatment time was 75 hours at 950°C in the step of (Preparation of Glass Ceramic). Other conditions are the same as those in Example 1.

After the heat treatment of the molded body 1, a glass ceramic having a white appearance (hereinafter referred to as a "sample 14") was obtained.

### (Example 21)

A glass frit (hereinafter referred to as a "glass frit 21") was prepared in the same manner as in Example 1 described above. A molded body of the glass frit 21 was subjected to a heat treatment to prepare a glass ceramic.

However, in Example 21, the powders were mixed to prepare a mixed powder such that, in the step of (Preparation of Glass Cullet) described above, Li was 44.6%, Ta was 25.4%, P was 12.7%, Si was 4.0%, and B was 13.3% in terms of at% of cations. In addition, in Example 21, the heat treatment temperature was 690°C in the step of (Preparation of Glass Ceramic). Other conditions are the same as those in Example 1.

After the heat treatment of a molded body (referred to as a "molded body 21"), a glass ceramic having a white appearance (hereinafter referred to as a "sample 21") was obtained.

Note that, as in Example 1, when the crystallization temperature of the glass frit 21 was measured, the crystallization temperature was 692°C. In addition, as a result of the X-ray diffraction analysis of the glass frit 21, it is found that no crystal is present in the glass frit 21.

### (Example 22)

A glass ceramic was prepared by using the following method.

### (Preparation of LiTa₂PO₈ Crystal Powder)

Using a dry ball mill, 23.86 g of a tantalum oxide (Ta₂O₅, manufactured by Kanto Chemical Co., Inc., a 3N5 high-purity reagent) powder and 4.64 g of lithium metaphosphate (LiPO₃, manufactured by Hakushin Chemical Laboratory Co., Ltd.) were mixed to prepare a mixed powder.

Next, the mixed powder was charged into a zirconia container and heated to 1170°C at a heating rate of 300°C/hour in the air. Thereafter, the mixed powder was maintained at this temperature for 6 hours, and then cooled to room temperature at a cooling rate of 300°C/hour. After the heat treatment, a lump product was recovered.

Thereafter, the lump product was pulverized using a dry ball mill to obtain a powder having an average particle diameter of 5.2 µm. It is found that this powder is crystalline LiTa₂PO₈.

### (Preparation of Li-containing Borosilicate Glass Frit)

Lithium metaborate (12.60 g) (LiBO₂, manufactured by FUJIFILM Wako Pure Chemical Corporation, purity: 99% or more), 7.50 g of lithium carbonate (Li₂CO₃, manufactured by Kanto Chemical Co., Inc., a 3N5 high-purity reagent), and 6.90 g of lithium metasilicate (Li₂SiO₃, manufactured by Strem Chemicals Inc., purity: 99%) were mixed to prepare a mixed powder (referred to as a "mixed powder A").

Next, 27 g of the mixed powder A was charged into a platinum container and melted by a heat treatment. The melting temperature was 1450°C, and the melting time was 30 minutes. Thereafter, the melt was sufficiently stirred with a platinum rod.

Next, the obtained melt was quenched by using the method described above to obtain a flaky glass cullet (hereinafter referred to as a "glass cullet 22").

The obtained glass cullet 22 was transparent.

Next, 15 g of the glass cullet 22 and 250 g of a stabilized zirconia ball having a diameter of 10 mm were charged into a 250 mL HDPE container and subjected to a ball mill pulverization treatment. A rotation speed was 94 rpm, and a pulverization time was 15 hours.

Accordingly, a Li-containing borosilicate glass frit having an average particle diameter of 1.0 µm (hereinafter referred to as a "glass frit 22") was obtained.

Note that, as in Example 1, when the crystallization temperature of the glass frit 22 was measured, the crystallization temperature was 370°C. In addition, as a result of the X-ray diffraction analysis of the glass frit 22, it is found that no crystal is present in the glass frit 22.

### (Preparation of Glass Ceramic)

Next, 9.5 g of the LiTa₂PO₈ crystal powder prepared as described above and 0.5 g of the glass frit 22 were mixed to obtain a mixture (hereinafter referred to as a "mixture 22").

Thereafter, the mixture 22 was molded in the same manner as in Example 1 to form a molded body, and then the molded body was subjected to a heat treatment to prepare a glass ceramic. Note that, in Example 22, the heat treatment conditions of the molded body were 1050°C and 24 hours.

Accordingly, a glass ceramic having a white appearance (hereinafter referred to as a "sample 22") was obtained.

### (Example 23)

A glass ceramic was prepared by the following method.

### (Preparation of Glass Cullet)

First, 23.45 g of lithium metaphosphate (LiPO₃, manufactured by Hakushin Chemical Laboratory Co., Ltd.), 3.35 g of lithium metaborate (LiBO₂, manufactured by FUJIFILM Wako Pure Chemical Corporation, purity: 99% or more), 2.00 g of lithium carbonate (Li₂CO₃, manufactured by Kanto Chemical Co., Inc., a 3N5 high-purity reagent), and 1.85 g of lithium metasilicate (Li₂SiO₃, manufactured by Strem Chemicals Inc., purity: 99%) were mixed to prepare a mixed powder. The mixed powder was prepared such that lithium (Li) was 54.7%, phosphorus (P) was 34.3%, silicon (Si) was 2.5%, and boron (B) was 8.5% in at% of cations.

Next, this mixed powder was charged into a platinum container and melted by a heat treatment. The melting temperature was 1450°C, and the melting time was 30 minutes. Thereafter, the melt was sufficiently stirred with a platinum rod.

Next, the obtained melt was quenched by using the method described above. Accordingly, a flaky glass cullet (hereinafter referred to as a "glass cullet 23") of about 26 g was obtained.

It is found that the obtained glass cullet 23 includes a mixture of an opaque portion and a transparent portion.

### (Preparation of Mixture of Glass Frit and Tantalum Oxide Powder)

Next, 12.28 g of a tantalum oxide (Ta₂O₅, manufactured by Kanto Chemical Co., Inc., a 3N5 high-purity reagent) powder was added to 3.00 g of the glass cullet 23. To the mixture, 250 g of a stabilized zirconia ball having a diameter of 10 mm was added, and then the mixture was charged into a 250 mL HDPE container and subjected to a ball mill pulverization treatment. A rotation speed was 94 rpm, and a pulverization time was 15 hours.

Accordingly, a white powder having an average particle diameter of about 1.2 µm (hereinafter referred to as a "mixture 23") was obtained.

### (Preparation of Glass Ceramic)

Thereafter, the mixture 23 was molded in the same manner as in Example 1 to form a molded body, and then the molded body was subjected to a heat treatment to prepare a glass ceramic. Note that, in Example 23, the heat treatment conditions of the molded body were 1050°C and 24 hours.

Accordingly, a glass ceramic having a white appearance (hereinafter referred to as a "sample 23") was obtained.

Table 1 below summarizes the production conditions and the like of the samples produced in each example.

**Table 1**

| Ex. | Mixing step | | | | | Melting step | | Step of pulverizing glass cullet | Glass frit | | Heat treatment step | | Note |
|---|---|---|---|---|---|---|---|---|---|---|---|---|---|
| | Content (at%) of cation in mixed powder | | | | | Melting temperature (°C) | Melting time (min) | Rotation speed (rpm) × pulverization time (h) | Crystallization temperature (°C) | Seed crystal | Treatment temperature (°C) | Treatment time (h) | |
| | Li | Ta | P | Si | B | | | | | | | | |
| 1 | 32.4 | 40.7 | 20.3 | 1.5 | 5.0 | 1450 | 30 | 94 × 15 | 782 | Present | 950 | 5 | |
| 2 | 34.0 | 38.8 | 19.4 | 1.8 | 6.1 | 1450 | 30 | 94 × 15 | 784 | Present | 920 | 5 | |
| 3 | 36.7 | 35.4 | 17.7 | 2.4 | 7.9 | 1450 | 30 | 94 × 15 | 714 | Present | 860 | 5 | |
| 4 | 40.1 | 31.0 | 15.5 | 3.1 | 10.3 | 1450 | 30 | 94 × 15 | 729 | Present | 950 | 5 | |
| 11 | 32.4 | 40.7 | 20.3 | 1.5 | 5.0 | 1450 | 30 | 94 × 15 | 782 | Present | 785 | 5 | |
| 12 | 32.4 | 40.7 | 20.3 | 1.5 | 5.0 | 1450 | 30 | 94 × 15 | 782 | Present | 1000 | 5 | |
| 13 | 32.4 | 40.7 | 20.3 | 1.5 | 5.0 | 1450 | 30 | 94 × 15 | 782 | Present | 950 | 30 | |
| 14 | 32.4 | 40.7 | 20.3 | 1.5 | 5.0 | 1450 | 30 | 94 × 15 | 782 | Present | 950 | 75 | |
| 21 | 44.6 | 25.4 | 12.7 | 4.0 | 13.3 | 1450 | 30 | 94 × 15 | 692 | Absent | 690 | 5 | |
| 22 | Mixed powder A | | | | | 1450* | 30* | 94 × 15** | 370 | Absent | 1050 | 24 | Subject mixture of LiTa₂PO₈ crystal powder + glass frit to heat treatment |
| 23 | 54.7 | - | 34.3 | 2.5 | 8.5 | 1450 | 30 | 94 × 15 | 430 | Absent | 1050 | 24 | Subject mixture of glass cullet + Ta₂O₅ to heat treatment |

| | | | | | | | | | | | | | |
|---|---|---|---|---|---|---|---|---|---|---|---|---|---|
| *treatment for mixed powder A **treatment for glass cullet | | | | | | | | | | | | | |

### (Evaluation)

Each sample was evaluated as follows.

### (X-ray Diffraction Analysis)

The X-ray diffraction analysis of each sample was performed using Cu-Kα rays.

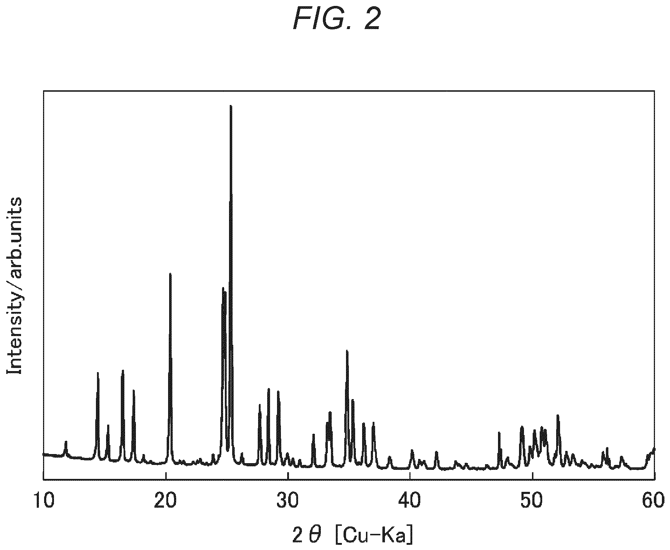

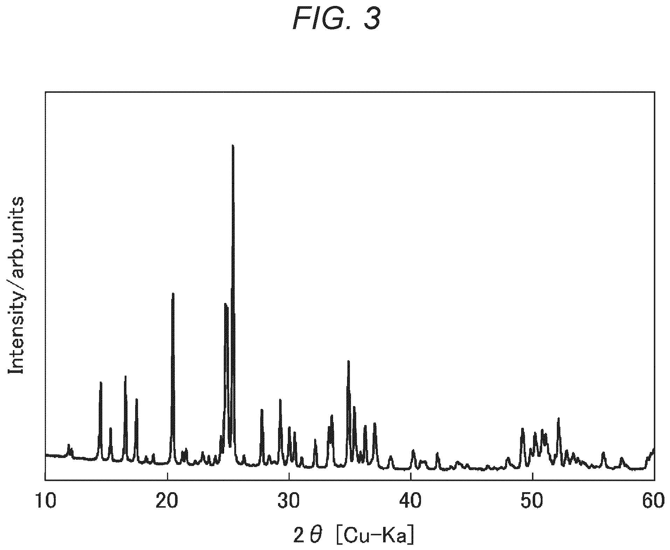

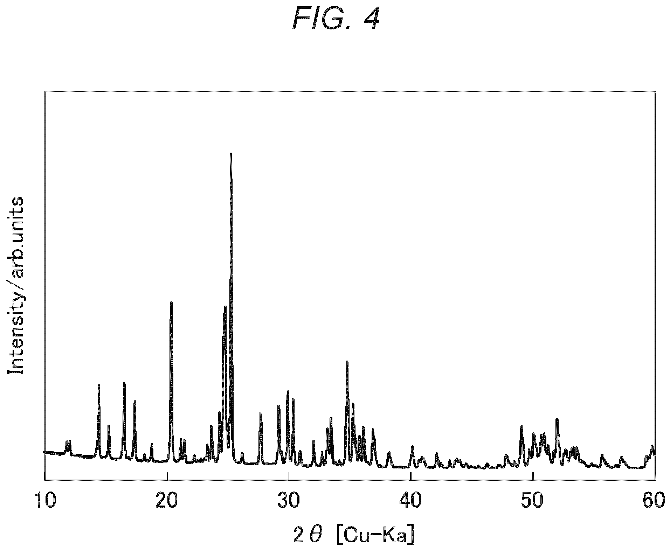

FIG. 2 to FIG. 4 each show an example of the obtained X-ray diffraction pattern. FIG. 2 shows an X-ray diffraction pattern obtained in the sample 1. FIG. 3 shows an X-ray diffraction pattern obtained in the sample 2. FIG. 4 shows an X-ray diffraction pattern obtained in the sample 4.

As can be seen from FIG. 2, in the sample 1, the maximum peak occurring in the range of 2θ = 20° to 30° is observed at the position of 2θ = 25.37°. This maximum peak was derived from the monoclinic crystal structure of LiTa₂PO₈, and the half width thereof was 0.10°.

In addition, as can be seen from FIG. 3, in the sample 2, the maximum peak occurring in the range of 2θ = 20° to 30° is observed at the position of 2θ = 25.42°. This maximum peak was derived from the monoclinic crystal structure of LiTa₂PO₈, and the half width thereof was 0.12°.

In addition, as can be seen from FIG. 4, in the sample 4, the maximum peak occurring in the range of 2θ = 20° to 30° is observed at the position of 2θ = 25.35°. This maximum peak was derived from the monoclinic crystal structure of LiTa₂PO₈, and the half width thereof was 0.15°.

### (EDX Analysis)

Element mapping of each sample was performed using an EDX analyzer.

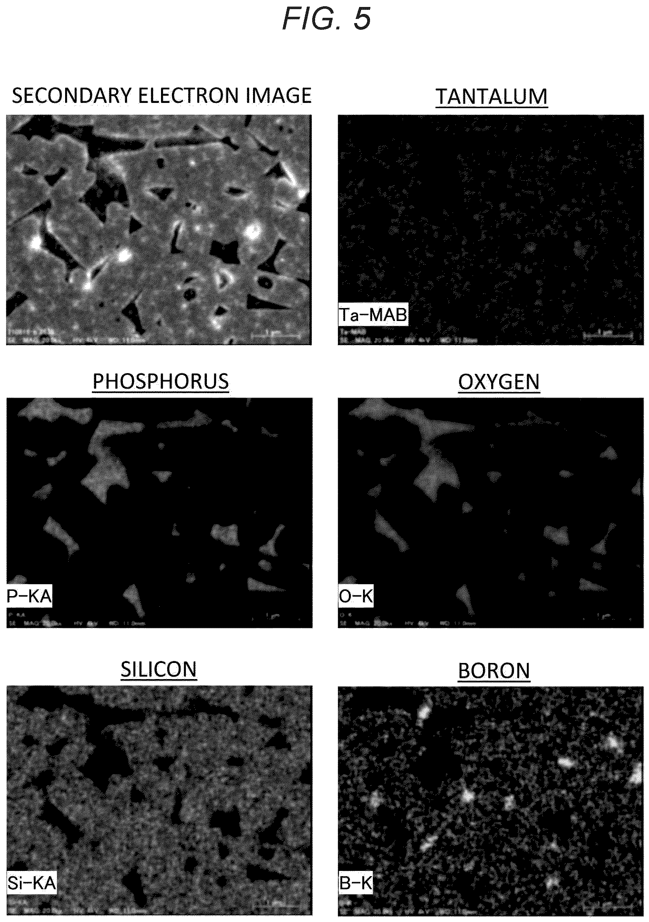

FIG. 5 shows an example of results of the EDX elemental mapping of the sample 1. As can be seen from FIG. 5, in the sample 1, Ta, Si, and B are present in the grains. In addition, it can be seen that P and oxygen are present at the grain boundary in the sample 1.

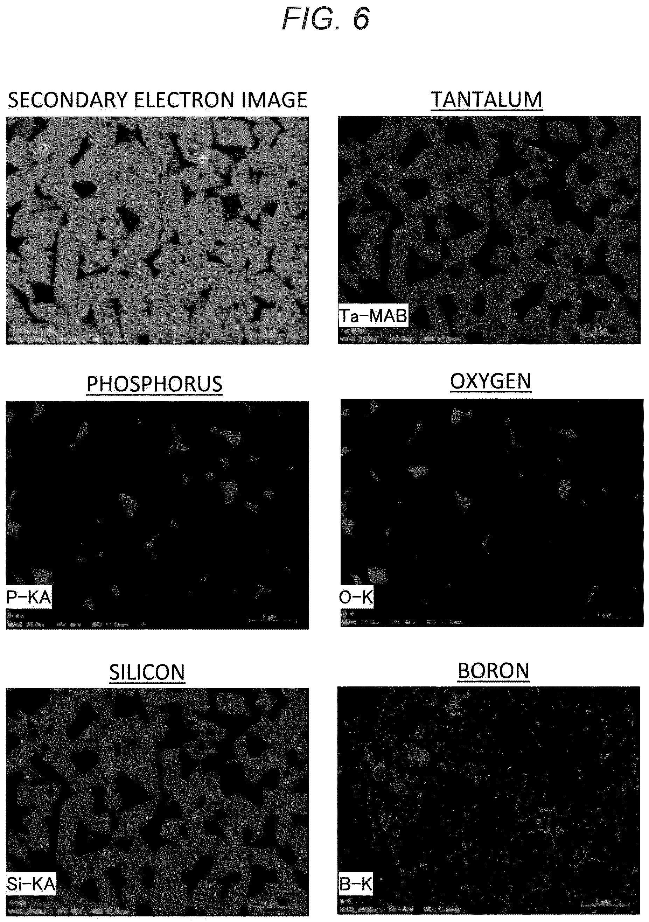

FIG. 6 shows an example of results of the EDX elemental mapping of the sample 2. As can be seen from FIG. 6, in the sample 2, Ta, Si, and B are also present in the grains. In addition, it can be seen that P and oxygen are present at the grain boundary in the sample 2.

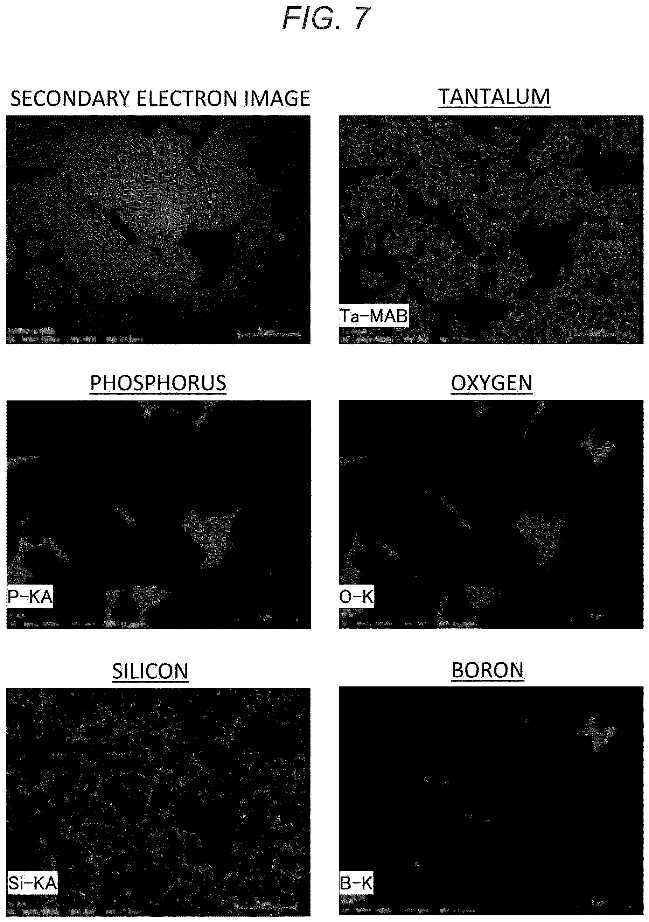

FIG. 7 shows an example of results of the EDX elemental mapping of the sample 22. As can be seen from FIG. 7, in the sample 22, Ta and Si are present in the grains, but B is not present in the grains. In addition, it can be seen that B, P, and oxygen are present at the grain boundary in the sample 22.

### (Measurement of Ion Conductivity)

The ion conductivity of each sample was measured by using the following method.

### (Measurement of AC Impedance)

A gold electrode (diameter: 5 mm) was formed on both surfaces of the glass ceramic sample by using a vapor deposition method. Next, a measurement voltage of 2θ mV was applied to the gold electrode, and the impedance of the glass flake was measured by using an AC impedance method. For the measurement, 4990EDMS-120K (manufactured by TOYO Corporation) was used, and the measurement frequency was 100 Hz to 100 MHz. The obtained impedance spectrum was fitted with an equivalent circuit using equivalent circuit analysis software ZView software attached to the device, and the ion conductivity of lithium ions was evaluated.

Table 2 below summarizes the measurement results.

**Table 2**

| Sample | X-ray diffraction result | | | Elemental mapping result | | Ion conductivity (mS/cm) |
|---|---|---|---|---|---|---|
| | Position (°) of maximum peak at 2θ = 20° to 30° | Compound corresponding to maximum peak at 2θ = 20° to 30° | Half width (°) | Element detected in grain | Element detected at grain boundary | |
| 1 | 25.37 | LiTa₂PO₈ (monoclinic) | 0.10 | Ta, Si, B | P, O | 1.40 |
| 2 | 25.42 | LiTa₂PO₈ (monoclinic) | 0.12 | Ta, Si, B | P, O | 0.60 |
| 3 | 25.37 | LiTa₂PO₈ (monoclinic) | 0.13 | Ta, Si, B | P, O | 0.46 |
| 4 | 25.35 | LiTa₂PO₈ (monoclinic) | 0.15 | Ta, Si, B | P, O | 0.51 |
| 11 | 25.4 | LiTa₂PO₈ (monoclinic) | 0.11 | Ta, Si, B | P, O | 0.82 |
| 12 | 25.37 | LiTa₂PO₈ (monoclinic) | 0.10 | Ta, Si, B | P, O | 1.23 |
| 13 | 25.36 | LiTa₂PO₈ (monoclinic) | 0.10 | Ta, Si, B | P, O | 1.38 |
| 14 | 25.37 | LiTa₂PO₈ (monoclinic) | 0.10 | Ta, Si, B | P, O | 1.42 |
| 21 | - | - | - | - | - | 0.04 |
| 22 | ? | LiTa₂PO₈ (monoclinic) | 0.08 | Ta, Si | B, P, O | 0.37 |
| 23 | 25.40 | LiTa₂PO₈ (monoclinic) | 0.08 | Ta, Si | B, P, O | Not measurable |

As shown in Table 2, it can be seen that a good ion conductivity cannot be obtained in the samples 21 to 23. In contrast, it can be seen that a high ion conductivity of more than 0.40 mS/cm is obtained in the samples 1 to 4 and the samples 11 to 14.

### (Aspects of Present Invention)

The present invention includes the following aspects.

### (Aspect 1)

A glass ceramic including:
lithium (Li);
an element M;
phosphorus (P);
oxygen (O); and
at least one element selected from boron (B) and silicon (Si), in which
the element M includes at least one element selected from the group consisting of zirconium (Zr), hafnium (Hf), tin (Sn), samarium (Sm), niobium (Nb), tantalum (Ta), tungsten (W), and molybdenum (Mo), and
in an X-ray diffraction pattern of the glass ceramic, a maximum peak occurring in a range of 2θ = 20° to 30° is derived from a monoclinic crystal structure, and a half width of the maximum peak is 0.10° or more.

### (Aspect 2)

The glass ceramic according to Aspect 1, in which the element M includes Ta.

### (Aspect 3)

The glass ceramic according to Aspect 1 or 2, in which
the glass ceramic has a crystal and a grain boundary, and
at least one of B and Si is present in the crystal.

### (Aspect 4)

The glass ceramic according to any one of Aspects 1 to 3, having an ion conductivity of 0.40 mS/cm or more at room temperature.

### (Aspect 5)

An electrochemical device including the glass ceramic according to any one of Aspects 1 to 4.

### (Aspect 6)

The electrochemical device according to Aspect 5, in which the electrochemical device is an all-solid-state battery.

### (Aspect 7)

A solid electrolyte for an electrochemical device, including the glass ceramic according to any one of Aspects 1 to 4.

### (Aspect 8)

An electrode for an electrochemical device, including the glass ceramic according to any one of Aspects 1 to 4.

### (Aspect 9)

The solid electrolyte according to Aspect 7, or the electrode according to Aspect 8, in which the electrochemical device is an all-solid-state battery.

### (Aspect 10)

A method for producing a glass ceramic, the method including:
(1) mixing a first raw material containing lithium (Li), an element M, phosphorus (P), and oxygen (O) with a second raw material containing at least one element selected from boron (B) and silicon (Si) to prepare a mixed powder, where the element M includes at least one element selected from the group consisting of zirconium (Zr), hafnium (Hf), tin (Sn), samarium (Sm), niobium (Nb), tantalum (Ta), tungsten (W), and molybdenum (Mo);
(2) heating the mixed powder to a temperature of 1200°C to 1650°C to obtain a melt;
(3) cooling the melt to form a glass cullet containing a seed crystal;
(4) pulverizing the glass cullet to obtain a glass frit containing the seed crystal; and
(5) heating the glass frit to a temperature equal to or higher than a crystallization temperature of the glass frit to form a glass ceramic.

The present application claims priority based on Japanese Patent Application No. 2022-148696 filed on September 20, 2022, and the entire contents thereof are incorporated herein by reference.

## Claims

1. A glass ceramic comprising:
lithium (Li);
an element M;
phosphorus (P);
oxygen (O); and
at least one element selected from boron (B) and silicon (Si), wherein
the element M includes at least one element selected from the group consisting of zirconium (Zr), hafnium (Hf), tin (Sn), samarium (Sm), niobium (Nb), tantalum (Ta), tungsten (W), and molybdenum (Mo), and
in an X-ray diffraction pattern of the glass ceramic, a maximum peak occurring in a range of 2θ = 20° to 30° is derived from a monoclinic crystal structure, and a half width of the maximum peak is 0.10° or more.

2. The glass ceramic according to claim 1, wherein the element M includes Ta.

3. The glass ceramic according to claim 1, wherein
the glass ceramic has a crystal and a grain boundary, and
at least one of B and Si is present in the crystal.

4. The glass ceramic according to claim 1, having an ion conductivity of 0.40 mS/cm or more at room temperature.

5. An electrochemical device comprising the glass ceramic according to claim 1.

6. The electrochemical device according to claim 5, wherein the electrochemical device is an all-solid-state battery.

7. A solid electrolyte for an electrochemical device, comprising the glass ceramic according to claim 1.

8. An electrode for an electrochemical device, comprising the glass ceramic according to claim 1.

9. The solid electrolyte according to claim 7, or the electrode according to claim 8, wherein the electrochemical device is an all-solid-state battery.

10. A method for producing a glass ceramic, the method comprising:
(1) mixing a first raw material containing lithium (Li), an element M, phosphorus (P), and oxygen (O) with a second raw material containing at least one element selected from boron (B) and silicon (Si) to prepare a mixed powder, where the element M includes at least one element selected from the group consisting of zirconium (Zr), hafnium (Hf), tin (Sn), samarium (Sm), niobium (Nb), tantalum (Ta), tungsten (W), and molybdenum (Mo);
(2) heating the mixed powder to a temperature of 1200°C to 1650°C to obtain a melt;
(3) cooling the melt to form a glass cullet containing a seed crystal;
(4) pulverizing the glass cullet to obtain a glass frit containing the seed crystal; and
(5) heating the glass frit to a temperature equal to or higher than a crystallization temperature of the glass frit to form a glass ceramic.
